# DEMANDE DE BREVET EUROPEEN

(11) **EP 1 538 509 A1**
(43) Date de publication de la demande: **08.06.2005**
(21) Numéro de dépôt: 03293036.4
(22) Date de dépôt: 04.12.2003
(51) Int. Cl.: G06F 1/00

(54) **Procédé de sécurisation de l'éxécution d'un programme contre des attaques par rayonnement**

(71) Demandeur: Axalto S.A., 92120 Montrouge (FR)
(72) Inventeur: Giraud, Nicolas, Schlumberger Systèmes, 78431 Louveciennes Cedex (FR); Rainsard, Stéphane, Schlumberger Systèmes, 78431 Louveciennes Cedex (FR)
(74) Mandataire: Renault, Patricia Marie Jacqueline

(57) **Abrégé**

Le procédé selon la présente invention concerne un procédé de sécurisation de l'exécution d'un programme dans un ensemble électronique comportant des moyens de traitement de l'information et des moyens de mémorisation d'informations. Le procédé consiste à contrôler l'exécution de chacune des instructions d'au moins une portion dudit programme en effectuant lors de l'exécution de ladite portion un calcul utilisant des valeurs prédéterminées, fonction de ou associées à chacune desdites instructions et en comparant le résultat obtenu à une valeur précalculée.

La présente invention concerne également le module électronique dans lequel ledit procédé est implémenté et la carte comprenant ledit module.

## Description

La présente invention concerne un procédé et un dispositif de sécurisation d'un ensemble électronique mettant en oeuvre un programme à protéger. Plus précisément, le procédé vise à proposer une parade aux attaques par rayonnement, flash, lumière, laser, glitch, ou autres ou plus généralement à toute attaque perturbant l'exécution des instructions du programme. De telles attaques ont pour conséquence de modifier des instructions à exécuter et pour résultat l'inexécution ou la mauvaise exécution de certaines parties du programme.

### DOMAINE TECHNIQUE

Lors de l'exécution d'un programme, les attaques par exemple par laser, glitch ou rayonnement électromagnétique ont pour conséquence de modifier les codes d'instructions exécutés par le processeur comme transformer un codop d'instruction quelconque en codop 00h (BRSETO sur 6805, NOP sur 8051 et AVR) : les instructions du programme sont remplacées par des instructions inopérantes. De ce fait, il en résulte une inexécution ou une exécution irrégulière de certaines parties du code, par exemple l'exécution d'instructions inopérantes au lieu et place d'une séquence de traitement sécuritaire par exemple dans un système d'exploitation pour carte à puce. Les attaques peuvent perturber le fonctionnement du processeur et provoquer des sauts intempestifs dans la mémoire programme.

Le présent demandeur a déposé une demande de brevet français n°0016724 le 21 décembre 2000 portant sur un procédé de sécurisation de l'exécution d'un programme implanté dans un module électronique à microprocesseur, ainsi que le module électronique et la carte à microcircuit associés. La solution protégée dans ladite demande consiste à déclencher par intermittence des interruptions et dérouter ainsi l'exécution du programme pour parer à des attaques éventuelles. Cette solution permet de détecter et d'empêcher les attaques par rayonnement avec une bonne probabilité. Cependant, certaines attaques peuvent ne pas être révélées, en particulier si l'attaque a lieu brièvement entre deux interruptions.

Parmi les parades connues, une autre solution consiste à positionner des drapeaux dans un octet de la mémoire RAM à intervalles réguliers et à vérifier qu'à un point précis du déroulement du logiciel tous les drapeaux devant être positionnés le sont effectivement. Toutefois la mise en place de cette parade est fastidieuse car il est nécessaire d'allouer des zones de mémoire volatile spécifiques et de rajouter les traitements dans le code à protéger partout où cela est nécessaire. De plus, les attaques de ce type devenant de plus en plus courte et précises, les solutions connues perdent en efficacité. D'une part, l'attaque peut être suffisamment courte pour que le positionnement des drapeaux n'en soit pas affecté ; l'exécution d'une partie du logiciel peut ainsi être empêchée de manière totalement indécelable. D'autre part, le logiciel de vérification des drapeaux peut être lui-même perturbé.

Un but de la présente invention est de proposer une protection efficace même pour des attaques très courtes.

Un autre but de la présente invention est de proposer une solution susceptible d'être implémentée dans les composants actuels sans adaptation, peu consommatrice en ressources et ne diminuant pas les performances de l'ensemble dans lequel elle est implémentée.

### RESUME DE L'INVENTION

La présente invention concerne un procédé de sécurisation de l'exécution d'un programme dans un ensemble électronique comportant des moyens de traitement de l'information et des moyens de mémorisation d'informations caractérisé en ce qu'il consiste à contrôler l'exécution de chacune des instructions d'au moins une portion dudit programme en effectuant lors de l'exécution de ladite portion un calcul utilisant des valeurs prédéterminées, fonction de ou associées à chacune desdites instructions et en comparant le résultat obtenu à une valeur précalculée.

La présente invention concerne également un module électronique dans lequel ledit procédé est implémenté, une carte comprenant ledit module, un programme permettant d'implémenter ledit procédé.

### DESCRIPTION SOMMAIRE DES DESSINS

D'autres buts, avantages et caractéristiques de l'invention apparaîtront à la lecture de la description qui va suivre de la mise en oeuvre du procédé selon l'invention et d'un mode de réalisation d'un ensemble électronique adapté pour cette mise en oeuvre, donnés à titre d'exemple non limitatif en référence aux dessins ci-annexés dans lesquels :
- la figure 1 représente de manière schématique un exemple de dispositif dans lequel le procédé selon la présente invention est implémenté ;

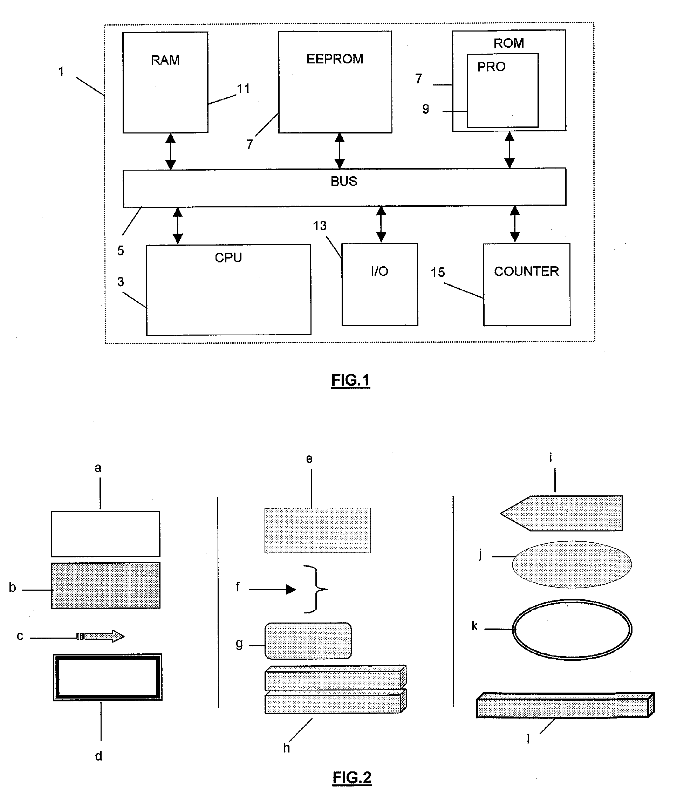

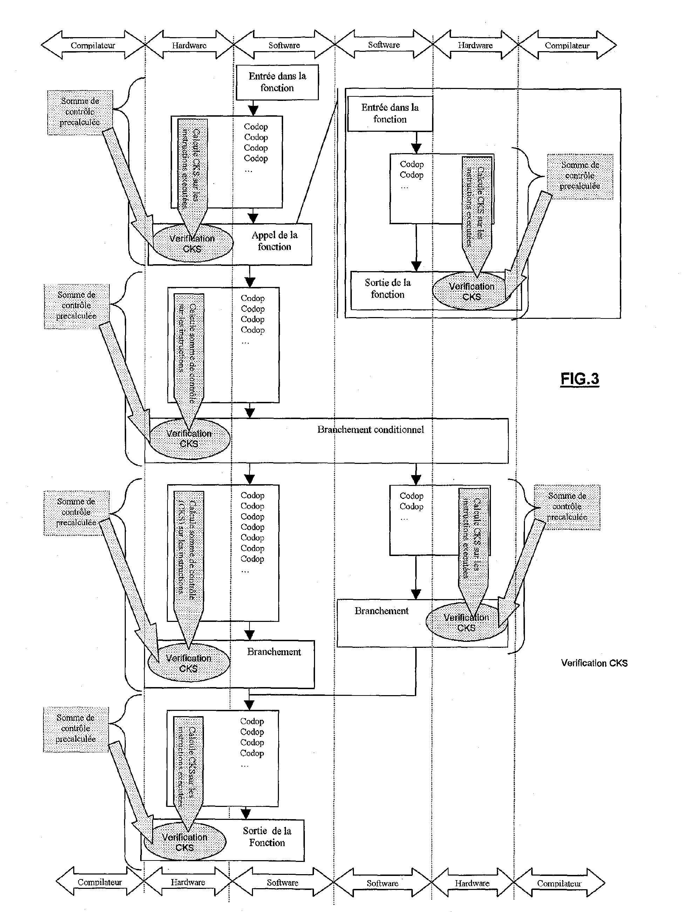

- la figure 2 est une légende pour interpréter l'ensemble des figures 3 à 7 annexées : un rectangle a non grisé représentent une portion de code exécutée, un rectangle b grisé une portion de code non exécutée. Les flèches c grisées représentent une attaque : leur longueur indique la durée de l'attaque ; leur positionnement indique la portion de code du programme attaquée. Le rectangle d à bords gras représente une détection d'anomalie. Le rectangle e grisé clair à bords fins représente des données pré calculées. L'accolade f représente la portée d'un pré-calcul. Le rectangle g à coins arrondis représente une adresse du code. Les rectangles h en perspective visualisent l'état de la pile. Les larges flèches i grisées dont l'extrémité en pointe prolonge le rectangle de base et les ellipses grisées j représentent des mécanismes matériels, les ellipses k non grisées à bord double représentant des mécanismes logiciels. Les rectangles I en perspective à bords gras représentent des mécanismes logiciels en pile ;
- la figure 3 est une représentation schématique de l'exécution d'un programme en l'absence d'une attaque dans laquelle les étapes du procédé de sécurisation selon une forme de réalisation de la présente invention ont été mises en évidence ;
- la figure 4 est une représentation schématique de l'exécution d'un programme en présence d'une attaque dans laquelle les étapes du procédé de sécurisation selon la forme de réalisation représentée sur la figure 3 ont été mises en évidence ;
- la figure 5 est une représentation schématique de l'exécution d'un programme en l'absence d'une attaque dans laquelle les étapes du procédé de sécurisation selon une autre forme de réalisation de la présente invention ont été mises en évidence ;
- la figure 6 est une représentation schématique de l'exécution d'un programme en présence d'une attaque dans laquelle les étapes du procédé de sécurisation selon la forme de réalisation représentée sur la figure 5 ont été mises en évidence ;
- la figure 7 est une représentation schématique de l'exécution d'un programme en l'absence d'une attaque dans laquelle les étapes du procédé de sécurisation selon une variante de la forme de réalisation représentée sur la figure 5 ont été mises en évidence.

### MANIERE DE REALISER L'INVENTION

Le procédé selon l'invention vise à sécuriser un ensemble électronique, et par exemple un objet portable tel qu'une carte à puce mettant en oeuvre un programme. L'ensemble électronique comprend au moins des moyens de traitement tels qu'un processeur et des moyens de mémorisation tels qu'une mémoire. Le programme à sécuriser est installé dans la mémoire, par exemple de type ROM (Read Only Memory) dudit ensemble.

A titre d'exemple non limitatif, l'ensemble électronique décrit dans ce qui suit correspond à un système embarqué comprenant un module électronique 1 illustré sur la figure 1. De tels modules sont réalisés le plus souvent sous la forme d'un microcircuit électronique intégré monolithique, ou puce, qui une fois protégé physiquement par tout moyen connu peut être monté sur un objet portatif tel que par exemple une carte à puce, carte à microcircuit ou circuit intégré (carte à microprocesseur ...) ou autre utilisable dans divers domaines.

Le module électronique 1 comprend un microprocesseur CPU 3 relié de façon bidirectionnelle par un bus 5 interne à une mémoire 7 non volatile de type ROM, EEPROM, Flash, FeRam ou autre contenant le programme PRO 9 à exécuter, une mémoire 11 vive de type RAM, des moyens 13 I/O d'entrée/sortie pour communiquer avec l'extérieur, des moyens 15 d'évaluation tels qu'au moins un compteur COUNTER.

Le procédé selon l'invention consiste à s'assurer que le programme 9 est exécuté dans son intégralité tel qu'il est implanté dans la mémoire en vérifiant que chaque instruction du flot d'exécution est effectivement exécutée par le microprocesseur 3.

Le procédé selon l'invention consiste à contrôler l'exécution de chacune des instructions d'au moins une portion dudit programme en effectuant lors de l'exécution de ladite portion un calcul arithmétique utilisant des valeurs prédéterminées, fonction de ou associées à chacune des instructions et en comparant le résultat obtenu à une valeur précalculée stockée dans lesdits moyens de mémorisation. On entend par valeur prédéterminée toute valeur ne dépendant pas des caractéristiques physiques du système dans lequel le procédé est implémenté et des caractéristiques physiques de l'exécution de ladite instruction dans ce système.

La valeur prédéterminée fonction d'une instruction est par exemple une valeur fonction du contenu, du type, de la fonction, du résultat et/ou de toute autre caractéristique attachée à ladite instruction proprement dite. Le contenu d'une instruction est entendu au sens de tout élément constituant ladite instruction, y compris le code opératoire et les paramètres. Le type d'une instruction est entendu au sens d'une caractéristique de l'instruction classant celle-ci dans une catégorie particulière d'instructions. La fonction d'une instruction est entendue au sens de la fonction exercée par ladite instruction dans la portion de programme concernée. Le résultat d'une instruction est entendu de toute valeur obtenue par l'exécution de ladite instruction s'il en existe une.

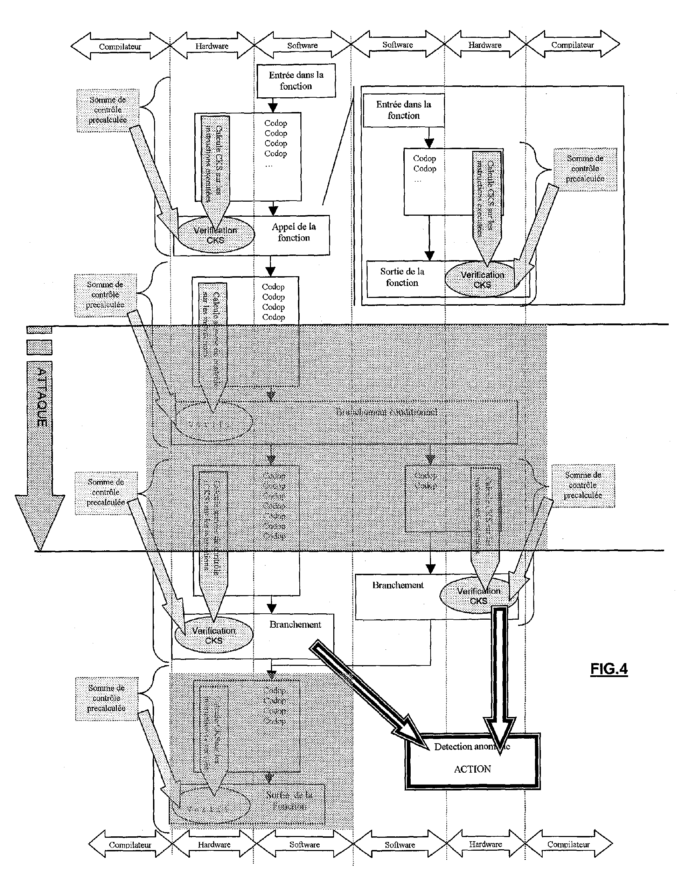

Selon une forme de réalisation selon la présente invention représentée sur les figures 3 et 4, le procédé consiste à effectuer pendant le fonctionnement du microprocesseur le calcul d'une somme de contrôle sur le contenu des instructions exécutées simultanément à leur exécution et à vérifier la somme de contrôle calculée en la comparant à une valeur pré-calculée et inscrite en mémoire. La valeur pré-calculée peut par exemple être mémorisée dans le code protégé lors du développement du programme correspondant. Une somme de contrôle, en anglais « checksum », est une « somme » d'un ensemble de données, à savoir une valeur calculée dépendant du contenu desdites données, utilisée à des fins de vérification.

Un programme comprend de multiples tests conditionnels et appels de routine traduits en langage machine à l'aide d'instructions de branchement, de saut, d'appel de routine ou équivalent, à savoir des instructions qui créent des embranchements dans le flot d'exécution. Dans le cas où des tests conditionnels ou appels de routine ou retour d'appel se suivent, la section de code peut compter seulement quelques instructions avant l'embranchement suivant dans l'arborescence des chemins d'exécution possibles. Dans le cas d'un saut à une autre routine, le point d'entrée de la routine est susceptible d'être atteint par différents chemins. Dans la présente invention, chaque point d'entrée ou instruction de saut ou équivalent dans le code du programme constitue le début d'une nouvelle section de code pour le calcul de sommes de contrôle.

Pour implémenter un mécanisme de vérification de sommes de contrôle, le procédé selon la présente invention effectue un pré-calcul des sommes de contrôle sur chaque portion de code à protéger délimitée par des points d'entrée ou de sortie ou des adresses de saut ou par des instructions de branchement ou de saut ou d'appel de routine ou de retour d'appel ou équivalent. Pour appliquer ledit procédé à l'ensemble du code, comme le montrent les figures 3 et 4, la présente invention utilise un compilateur spécifiquement adapté pour réaliser la tâche de pré-calcul des sommes de contrôle (accolade « somme de contrôle pré-calculée sur les figures 3 et 4 »). Le passage des sommes de contrôle pré-calculées en paramètre des instructions de fin de section de code exige des modifications importantes des compilateurs de type connu puisque le jeu d'instruction du processeur est modifié.

La vérification de la somme de contrôle peut être effectuée par le processeur. Pour cela, le procédé selon la présente invention fournit au microprocesseur à la fin de chaque portion de code à protéger la somme de contrôle pré-calculée qui sera comparée (« Vérification CKS » sur les figures 1 et 2) à la somme de contrôle calculée par le processeur au fil de l'exécution (« Calcule CKS » fig. 1 et 2). Cette valeur est fournie par exemple en paramètre de l'instruction de branchement ou de saut ou d'appel de routine ou de retour d'appel ou équivalent et/ou marquant la fin d'une portion de code à protéger ou d'une instruction marquant la fin d'une portion de code à protéger. Dans le cas d'une portion de code à protéger terminée par une adresse de saut, la vérification de la somme de contrôle peut s'effectuer soit par une instruction spécialement ajoutée dans le jeu d'instruction du processeur ou simplement en ajoutant une instruction de saut inconditionnel à l'instruction suivante.

La vérification est effectuée pendant l'instruction de fin de portion de code à protéger avec la valeur pré-calculée fournie en paramètre. La somme de contrôle calculée par le processeur au cours de l'exécution est réinitialisée pour la section de code suivante. Dans le cas où la vérification de la somme de contrôle révèle une différence, une action est déclenchée (« Détection anomalie sur la figure 4).

La vérification de la somme de contrôle pourrait également être effectuée par le logiciel sans modification du jeu d'instruction du processeur en comparant la valeur calculée par le processeur et la valeur pré-calculée. Dans ce cas, il n'est pas nécessaire de modifier le jeu d'instructions du processeur pour passer la somme de contrôle pré-calculée en paramètre de l'instruction de fin de section de code à protéger. Il suffit que la somme de contrôle calculée par le processeur à l'exécution soit accessible au programme dans un registre ou autre.

Cette méthode peu consommatrice en ressources présente l'avantage de fournir une protection intégrale sur le code à exécuter comprenant non seulement le codop mais également les paramètres.

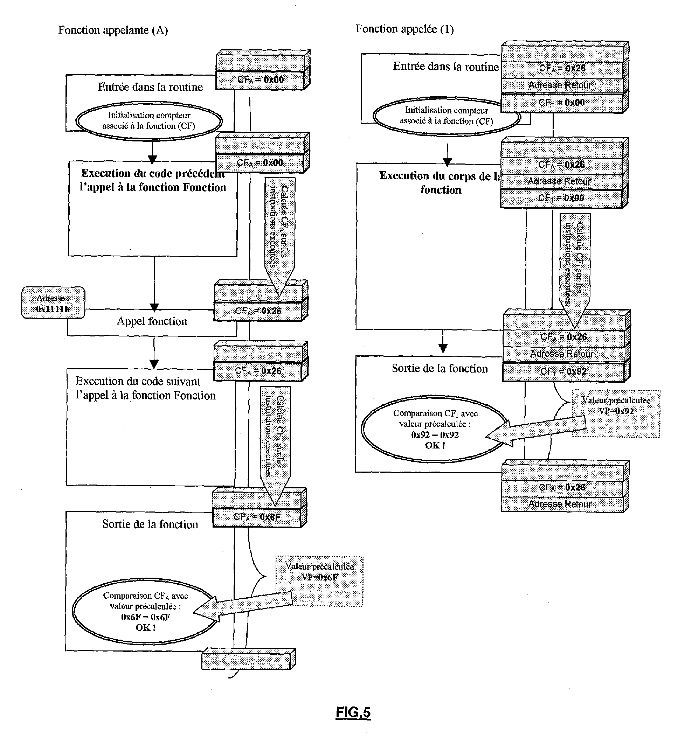

Selon une autre forme de réalisation du procédé selon la présente invention représentée sur les figures 5 à 7, un compteur 15 est attribué à au moins une fonction, une séquence ou plus généralement à au moins une portion dudit programme, et selon une forme de réalisation, à chaque portion, au début de son exécution. Une portion de programme comprend au moins une instruction. Dans la suite de la description, à titre illustratif, la portion considérée est une fonction. Le procédé consiste à incrémenter ledit compteur par le processeur simultanément à l'exécution de chaque instruction de ladite fonction en cours d'une valeur spécifique à l'instruction exécutée. A la fin de la fonction, la valeur atteinte, résultat de la séquence d'instruction exécutée, est vérifiée en comparaison à une valeur pré-calculée lors du développement du programme et inscrite dans le code protégé.

Le procédé selon ladite forme de réalisation est implémentable sans ajout ou modification du jeu d'instruction du processeur. Le procédé peut également être mis en oeuvre sans adaptation du compilateur.

Au début de chaque fonction, un compteur est attribué à la fonction dans une structure de données qui peut être la pile du processeur. Le compteur est initialisé à 0 ou à une valeur fixée pour la fonction (« Initialisation compteur » sur les figures 5 à 7). Pour chaque instruction du corps de la fonction exécutée avant l'instruction de retour d'appel, le compteur de la fonction est incrémenté d'une valeur spécifique à l'instruction (« Calcule CF ou CP » sur les figures 5 à 7). A la fin de la fonction, la valeur atteinte par le compteur est comparée à la valeur attendue, pré-calculée et utilisée comme valeur de référence dans le logiciel (« Comparaison CF » sur les figures 5 à 7).

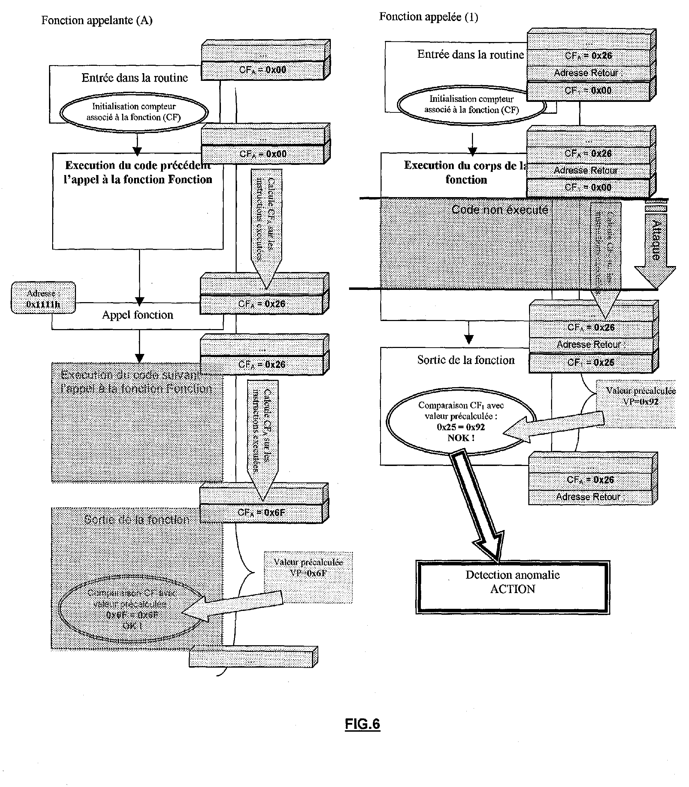

Comme le montre la figure 6, dans le cas où une attaque aurait eu lieu au cours de la fonction, les instructions n'ont pas été exécutées selon la séquence prévue dans le programme et la valeur du compteur à la fin de la fonction (CF1=0x25 sur la figure 6) est différente de la valeur attendue et contrôlée (Valeur pré calculée VP=0x92 sur la figure 6) ; l'attaque est ainsi détectée (« Détection anomalie » sur la figure) et une action spécifique est effectuée par le programme ou le processeur. Dans le cas où la vérification ne révélerait aucune anomalie, le compteur de la fonction est dé-alloué dans la structure de donnée (sur la figure 5, le compteur CF1 est dé-alloué).

Le code d'une fonction est constitué de multiples tests conditionnels et appels de routine ou équivalents, à savoir d'instructions qui créent des embranchements dans le flot d'exécution. De manière à obtenir la même valeur pour le compteur à la fin de la fonction quel que soit le chemin d'exécution, il est nécessaire d'équilibrer les différentes branches d'exécution possible.

La valeur d'incrémentation du compteur pour une instruction peut être le code machine de l'instruction (code opératoire + valeur des paramètres). Dans ce cas, le compte calculé sur les instructions exécutées correspond à une somme de contrôle calculée sur les instructions du flot d'exécution appartenant à la fonction. Les instructions exécutées dans les fonctions appelées sont prises en compte dans le compteur de ces fonctions et ne sont donc pas prises en compte dans le compteur de la fonction appelante.

L'équilibrage de tous les chemins d'exécution possibles dans la fonction doit être réalisé pour obtenir la même valeur du compteur à la fin de la fonction. Cet équilibrage est compliqué du fait que les instructions ne sont pas interchangeables entre elles. Il sera donc souvent nécessaire de rajouter une ou plusieurs instructions ayant uniquement pour but de rééquilibrer une branche par rapport à une autre. Cette solution induit une augmentation plus ou moins importante de la taille du code du fait du rééquilibrage des branches.

Une autre solution consiste à définir des classes d'instructions pour lesquelles la valeur d'incrémentation est la même. Ces classes ayant le même incrément regroupent des instructions similaires, par exemple la classe des branchements conditionnels, la classe des opérations arithmétiques et logiques, la classe des sauts et appels de fonctions. L'instruction NOP aura une valeur d'incrément 0 ; lors d'une attaque ayant pour effet de transformer les instructions du programme en NOP, le compteur ne sera pas incrémenté, ce qui aura pour effet de mettre en évidence l'attaque. Ce mécanisme permet de vérifier que chaque instruction du chemin d'exécution à l'intérieur d'une fonction s'exécute correctement.

Le regroupement des instructions en classes avec la même valeur d'incrément facilite l'équilibrage des branches : si chaque branche effectue des opérations différentes mais similaires, il est possible qu'elles utilisent des instructions ayant des valeurs d'incrément égales. De plus, il est possible d'équilibrer en employant des instructions différentes mais de la même classe que celles utilisées dans une autre branche. Par exemple un branchement conditionnel dans une branche peut être équilibré avec un branchement inconditionnel à l'instruction suivante dans une autre branche. Les paramètres des instructions ne sont pas pris en compte dans l'incrémentation du compteur, ce qui contribue également à faciliter l'équilibrage des branches. L'équilibrage des branches peut également se faire par accès direct au compteur de la fonction dans le cas où l'écart serait important.

La vérification de la valeur du compteur de la fonction, effectuée à la sortie de la fonction ou lors de vérifications intermédiaires, peut se faire de manière logicielle en lisant la valeur du compteur de la fonction en cours, incrémentée par le processeur au cours de l'exécution, et en la comparant avec la valeur pré-calculée. Cette vérification peut également être effectuée par le matériel en fournissant au processeur la valeur de contrôle pré-calculée. Cette valeur peut être fournie en paramètre d'une instruction de retour d'appel modifiée ou d'une instruction spécifiquement ajoutée dans le jeu d'instruction du processeur. L'instruction effectue la vérification en comparant la valeur pré-calculée fournie en argument à la valeur du compteur de la fonction en cours.

Les opérations d'allocation du compteur de la fonction dans une structure de données et l'initialisation de ce compteur à 0 ou à une autre valeur spécifique peuvent être effectuées de manière logicielle ou en matériel par le processeur dans une instruction d'appel de fonction modifiée.

Selon une variante, le procédé consiste à initialiser au début de chaque routine un pointeur sur le compteur de la routine après avoir sauvegardé sa précédente valeur. En sortant de la routine, le pointeur est réinitialisé à sa valeur précédente (l'adresse du compteur de la fonction appelante). Ce mécanisme permet de faire des vérifications intermédiaires du compteur au cours de la routine et notamment avant une opération sensible. Si la valeur du compteur n'est pas la valeur attendue à ce point de l'exécution de la routine, cela révèle que l'exécution de la routine a été perturbée.

L'allocation du compteur de la fonction sur la pile du processeur présente un intérêt si celle-ci n'est utilisée que pour sauvegarder les adresses de retour et éventuellement certains registres lors des appels de fonction. Dans ce cas, le compteur reste sur le sommet de la pile dans le corps de la fonction, ce qui dispense de maintenir par ailleurs un pointeur sur ce compteur dans le but d'effectuer des vérifications au cours de la routine. Dans un autre mode de réalisation, les compteurs des routines peuvent être alloués dans une structure de données différente de la pile du processeur (pouvant être une pile du compilateur) avec un moyen de retrouver le compteur de la routine en cours d'exécution (pouvant être un pointeur de pile).

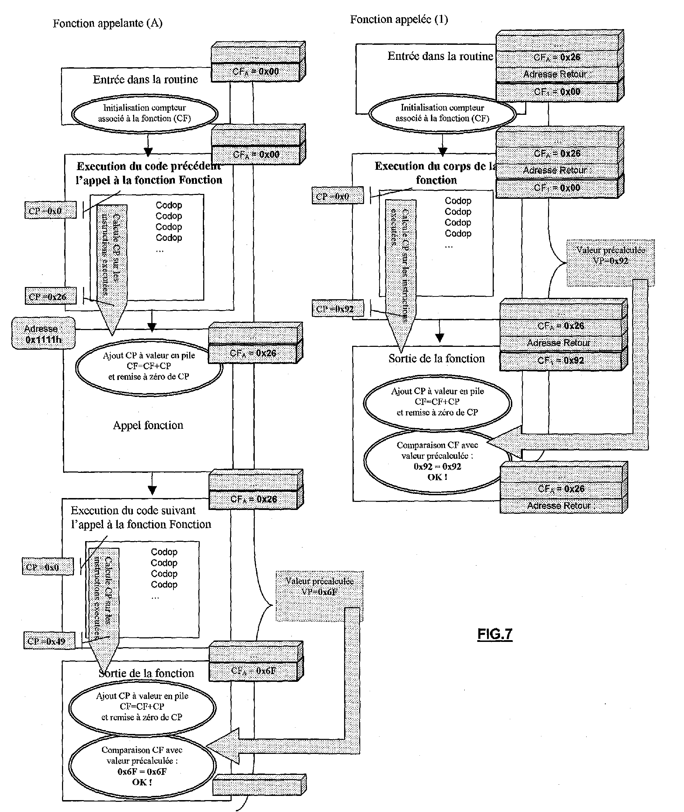

Un mode de réalisation du procédé illustré sur la figure 7 consiste à utiliser un compteur global (CP sur la figure 7) du processeur pour réaliser le comptage. L'incrémentation au cours de l'exécution des instructions est effectuée par le processeur dans ce compteur global (CP). Lors de chaque appel de fonction, la valeur du compteur global est ajoutée au compteur de la fonction appelante et réinitialisé à 0 (« Ajout CP à valeur en pile CF=CF+CP et remise à zéro de CP » sur la figure). Lors du retour d'une fonction, la valeur finale du compteur de la fonction est obtenue en ajoutant la valeur du compteur global avant la vérification, puis le compteur global est réinitialisée à 0 pour la fonction appelante.

Un des avantages du procédé selon la forme de réalisation illustrée sur les figures 5 à 7, dit procédé par compte de contrôle, réside dans le fait que le compte de contrôle est propre à chaque routine. Seules les instructions de la routine sont prises en compte, les routines appelées et notamment les routines d'aléa ou de désynchronisation ne sont pas prises en compte, ce qui simplifie le travail d'équilibrage des branches qui se limite au corps de chaque routine. De plus, il est possible de mettre en place le procédé seulement dans les fonctions où on l'estime nécessaire, ce qui peut permettre de réduire encore l'ampleur de la tâche d'équilibrage.

Le regroupement des instructions en classes avec la même valeur d'incrément facilite l'équilibrage des branches. Les paramètres des instructions ne sont pas pris en compte dans l'incrémentation du compteur, ce qui contribue également à faciliter l'équilibrage des branches.

Le procédé peut être implémenté sans modification du jeu d'instruction du processeur : il peut même être implémenté sans modification du processeur donc sur les processeurs actuels.

Il est possible de faire la vérification du compte de contrôle uniquement en fin de routine, ce qui limite l'accroissement de la taille du code.

## Revendications

1. Procédé de sécurisation de l'exécution d'un programme dans un ensemble électronique comportant des moyens de traitement de l'information et des moyens de mémorisation d'informations **caractérisé en ce qu'**il consiste à contrôler l'exécution de chacune des instructions d'au moins une portion dudit programme en effectuant lors de l'exécution de ladite portion un calcul utilisant des valeurs prédéterminées, fonction de ou associées à chacune desdites instructions et en comparant le résultat obtenu à une valeur précalculée.

2. Procédé selon la revendication 1, caractérisé en ce les valeurs fonction de chacune desdites instructions sont des valeurs fonction du contenu, du type, de la fonction, du résultat et/ou de toute caractéristique attachée auxdites instructions proprement dites.

3. Procédé selon l'une des revendications 1 ou 2, **caractérisé en ce qu'**il consiste à effectuer le calcul d'une somme de contrôle sur le contenu desdites instructions.

4. Procédé selon l'une des revendications 1 à 3, **caractérisé en ce qu'**il consiste à définir des classes d'instructions pour lesquels la valeur associée à chacune desdites instructions de ladite classe est identique.

5. Module électronique comportant des moyens de traitement de l'information et des moyens de mémorisation d'informations contenant un programme à exécuter **caractérisé en ce que** les moyens de traitement comportent des moyens permettant de contrôler l'exécution de chacune des instructions d'au moins une portion dudit programme en effectuant lors de l'exécution de ladite portion un calcul utilisant des valeurs prédéteminées fonction de ou associées à chacune desdites instructions et en comparant le résultat obtenu à une valeur précalculée.

6. Module selon la revendication 5, **caractérisé en ce que** lesdits moyens comprennent un processeur disposant d'instructions spéciales ou d'instructions de type connu modifiées permettant de prendre en compte la valeur précalculée pour chaque nouvelle portion de code et d'effectuer la comparaison.

7. Module selon la revendication 5, **caractérisé en ce que** le calcul effectué est mis à disposition d'un module logiciel réalisant la comparaison.

8. Module selon l'une des revendications 5 à 7, **caractérisé en ce que** lesdits moyens comprennent un compteur associé à ladite portion.

9. Carte **caractérisée en ce qu'**elle comprend le module électronique selon l'une des revendications 5 à 8.

10. Programme d'ordinateur comprenant des instructions de code de programme pour l'exécution des étapes du procédé selon l'une des revendications 1 à 4 lorsque ledit programme est exécuté dans un ensemble électronique.
